# EUROPEAN PATENT SPECIFICATION

(11) **EP 4 401 670 B1**
(45) Date of publication and mention of the grant of the patent: **17.12.2025**
(21) Application number: 22793118.5
(22) Date of filing: 16.09.2022
(51) Int. Cl.: A61C 3/025, F16K 37/00, G01M 3/28, F16K 7/06

(54) **A TUBE SECTION, A PINCH VALVE AND A POWDER GAS JET DEVICE**
ROHRABSCHNITT, QUETSCHVENTIL UND PULVERGASSTRAHLVORRICHTUNG
SECTION DE TUBE, VANNE À PINCEMENT ET DISPOSITIF À JET DE GAZ EN POUDRE

(30) Priority: 17.09.2021 EP 21197441
(43) Date of publication of application: 24.07.2024
(73) Proprietor: Ferton Holding S.A., 2800 Delémont (CH)
(72) Inventor: BEANI, Florent, 01170 Gex (FR); DONNET, Marcel, 01630 Saint Jean de Gonville (FR)
(74) Representative: Müller Schupfner & Partner Patent- und Rechtsanwaltspartnerschaft mbB (Muc)
(86) International application number: PCT/EP2022/075787
(87) International publication number: WO 2023/041715

(56) References cited:
- DE-B- 1 097 778
- US-A- 3 793 785
- US-A- 4 877 053
- US-A1- 2018 299 342

## Description

The present invention concerns a tube section for a pinch valve, a pinch valve and a powder gas jet device having such a pinch valve.

Professional dental prophylaxis is a maintenance treatment to remove dental plaque and calculus, which a patient is not able to remove during daily home care. This procedure is important, since the accumulation of dental plaque would lead to dental diseases such as tooth decay, gingivitis and periodontitis.

Air polishing is a dental prophylaxis procedure that sprays a powder on the teeth with the assistance of an air stream and a liquid stream, usually a water stream. Its advantages include the possibility to reach difficult areas such as interspaces between teeth, pockets between teeth and gingiva as well as around brackets, implants and appliances. Air polishing is an effective method, since it does neither need to perform repetitive movements nor different stages. It is faster than other methods and needs relatively little training.

For air polishing in general a powder gas jet device is used, as for example disclosed in EP 3 265 015 A1. Such a powder gas jet device typically comprises a handpiece, a powder chamber and often a stationary unit. The powder gas jet device mixes the powder with a gas for forming a powder gas mixture, which, in turn, is ejected by the handpiece in operation, usually surrounded by a water stream or jet. For actuating the powder gas jet device a food pedal can be used.

In order to gain all the benefit of air polishing, it is needed to manage the powder flow without wear. As the powder is an abrasive material, it is difficult to find a system allowing to block the powder flow without any wear of a valve system. When the valve system is worn-off, powder is sprayed everywhere until the system is stopped. The challenge for such a valve system is the powder being an abrasive material, which is able to penetrate inside any moving part to either block it or to wear it off. Furthermore, any connection part with powders is a part, in which the powder can accumulate and finally clog the system.

Currently, there are two alternatives available to solve said problem. According to a first alternative, a gas flow is blocked upstream to a powder chamber such that the valve does block the gas, such as air, but does not enter into contact with the powder. This resolves the problem of valve wear but makes the overall prophylaxis procedure more difficult: at every food pedal press for actuating the powder gas jet device, the powder chamber needs first to be filled with gas and at the end to be emptied from the gas. As a consequence, the system works with a delay of few seconds between the pedal press action and the treatment. This procedure can only be established for a comparably small powder chamber. If the powder chamber volume increases, the delay becomes longer (> 5 sec) so that it is not applicable any longer for a prophylaxis procedure.

Consequently, the concept of blocking air upstream to the powder chamber leads to a long delay between pedal press and activation of the device. This is detrimental for the application, for treatment precision and safety purposes. For example, if the user removes a handpiece before the powder chamber is empty, powder will be sprayed everywhere and could even be sprayed inside the eyes.

According to a second alternative, the powder flow can be blocked downstream to the powder chamber, in order to overcome the issue of delay between food pedal press and ejecting the powder gas mixture as explained above. Using standard valves leads to an unreliable powder gas jet device. Powder will enter inside the moving part of the valve and wear it off. Also, geometry changes in the valve are potentially clogging areas which tend to block the valve.

It turned out that using a pinch valve is a reliable means to control the gas/powder mixture because when the valve is open, no perturbation occurs on the powder flow. Using a pinch valve is an optimum process for powder because no geometrical change disturbs the powder flow during operation.

However, in case of a leakage or damage at the tube being squeezed in the pinch valve, powder exits the pinch valve and can even enter the interior of a housing of the powder gas jet device. This makes a complicated and laborious cleaning process necessary, especially in case of a pinch valve, being arranged inside a housing of a stationary unit of the powder gas jet device.

US 4 877 053 A discloses a tube section for a pinch valve comprising an inner tube element for transporting a medium, the inner tube being transferrable between an open state, in which the medium can flow through the inner tube element and a closed state, in which the medium is hindered from flowing through the inner tube element. The tube system of DE 1 097 778 B includes both an outer tube and an inner tube element. US 2018 299 342 A1 addresses a pinch valve mechanism having a rigid housing, the actuating element reaching through this housing, namely via a corresponding bore hole, for acting on the outer side of the inner tube for closing the inner tube element. US 3 793 785 A discloses a tube element system, the system being formed by an inner tube and an outer tube, which are actuated by balls of the pinch valve.

Considering the above, the object of the present invention is to simplify maintenance and repair processes.

The problem is solved by the tube section according to claim 1, a pinch valve according to claim 8 and a powder gas jet device according to claim 12. Preferred embodiments are incorporated in the dependent claims, the description and the figures.

According to a first aspect of the present invention a tube section for a pinch valve is provided, comprising
- an inner tube element for transporting a medium, the inner tube being transferrable between an open state, in which the medium can flow through the inner tube element, and a closed state, in which the medium is hindered to flow through the inner tube element, and
- an outer tube element, surrounding the inner tube element, for creating a collecting region between the inner tube element and the outer tube element to collect the medium in case of a leakage of the inner tube element,

wherein the inner tube element and the outer tube element are configured for transferring the inner tube element between an open state and a closed state, in particular in dependency of a force acting on the outer tube element, wherein the inner tube element is at least partially spaced from the outer tube element,
characterized in that the outer tube element is at least as deformable as the inner tube element such that an actuating mechanism can transfer the inner tube element into the closed state by deforming both, the outer tube element and the inner tube element and such that the outer tube element defines a hermetic barrier to powder in case of a leakage of the inner tube element.

Contrary to the state of the art, the present invention suggests an outer tube element surrounding the inner tube element such that in case of a leakage or damage of the inner tube element, the handled medium, in particular powder, will enter the collecting region between the inner tube element and the outer tube element and will be collected in this intermediate space, namely in the collecting region. Thus, it is avoided that the exiting medium, in particular powder, contaminates the whole pinch valve or even the whole device, into which the pinch valve is arranged or installed. As a result, repairing the pinch valve is simplified, since there is no need of a laborious cleaning process, which extracts the powder/medium from the pinch valve components and/or other components, which are close to the pinch valve. Instead, the cleaning process for removing process is restricted to the tube section.

The tube section can be used also in any kind of industrial device dedicated to abrasive or corrosive media transfer, such as sand blasting units, concrete or mud pumping or similar, or dedicated to fluid transfer without or with limited pollution, such as blood, IV diagnostics, clean room or similar. Thus the tube section can also be used in other technical fields besides devices being used for dental treatment.

Especially, it is provided that the tube section is part of the pinch valve in a mounted state, which is in charge of selecting whether a material or medium is transported or blocked by the pinch valve. In particular, the tube section is located between a first part and a second part of an actuating mechanism, and the actuating mechanism squeezes the tube section for transferring it from an open state to a closed state, especially by reducing the distance between the first part and the second part of the actuating mechanism. The medium is preferably a powder gas mixture. The outer tube element forms a sleeve, surrounding the inner tube element.

For being configured to be transferrable between the opened and closed state, the inner tube element and the outer tube element are deformable. Especially, it is provided that the inner tube element has a certain elasticity, which guarantees that the inner tube element returns automatically into the open state, when the actuating mechanism acts no longer on the inner tube element. In contrast to that, it is not necessary for the outer tube element to be transferred into a status, which was occupied by the outer tube element before the actuating mechanism acted on the outer tube element. Instead, it is also conceivable that the outer tube element has no elasticity and/or is not tensioned, when no force acts onto the tube section. For example, the outer tube element is just a foil. The deformability of the outer tube element is at least as big as the one of the inner tube element, preferably larger than the deformability of the inner tube element. The term "deformability" represents the property of changing the shape in reaction of an external force acting on the inner tube element and/or outer tube element. In particular, the term "deformable" means in context of this application that a body or component changes its shape/geometry, when a force of about 5 N or more, preferably 50 N or more and most preferably of about 25 N ore more acts on the body or the component, without destroying the component.

It is also conceivable that the outer tube element includes only a part being deformable, the deformable part being arranged adjacent to the first part and/or the second part of the actuating mechanism in the mounted state of the tube section. For example, the outer tube element includes a window section, being formed by a deformable material, while preferably a rest of the outer tube element is essentially made from a rigid material. Thus, it is possible that the outer tube element is already part of a housing for forming a cartridge like tube section.

In an embodiment which is not part of the present invention, it is also thinkable that the outer tube element includes an opening, though which the first part and/or the second part can pass through, when the tube section is installed in the pinch valve, wherein preferably a seal-tight connection is established between the outer tube element (in the region of the opening) and the first part and/or the second part of the actuating mechanism. In other words: The first part and/or the second part are arranged inside the opening of the outer tube element such that powder is hindered to exit the outer tube element via said opening.

According to the present invention, it is provided that the outer tube defines a hermetic barrier to powder in case of a leakage of the inner tube, at least when the tube section is in the open state. As a consequence, it is possible to guarantee that no powder can exit the tube section, for example in case of damage in the inner tube. The completely sealing connection hinders air and powder to pass the interface between the outer tube and an another component, to which the outer tube is connected to, or to leave the inner cavity being surrounded by the outer tube. Preferably, the skilled person understands as hermetic barrier preferably a completely sealing connection section to another component. For example, front sides of the outer tube are connected to an interface section of a certain component, in particular in a completely sealing manner. In order to establish the completely sealing connection a part of the outer tube might be pressed against the another component in the interface section. This might be realized by an external element, such as a ring, for example an elastic ring, and/or due to elastic force of the outer tube. For example, the outer tube includes no holes. Preferably, the outer tube is not made from a porous or air-permeable material, i. e. the outer tube is free of a porous or air-permeable material.

Especially, it is provided that the outer tube element and the inner tube element are arranged concentrically with respect to each other.

Preferably, the tube section comprises a first interface section for inserting the tube section into a pinch valve in an exchangeable manner, the first interface section preferably including a first adapter element. As a result, it is possible to provide an exchangeable tube section, which can be easily exchanged in case of a defect of the inner tube element. Especially, there is no need to perform a cleaning and/or complicated repairing process. Instead, it is possible to just remove the defect tube section and replace it by a new tube section. Preferably, it is provided that for a removing and installation mechanism only a translational movement is necessary such that the exchange process is further simplified. For example, the connection between the pinch valve and the tube section is realized in a form and/or force fitting manner, for instance by a press-fit connection. **It** is also thinkable that a bayonet mechanism or a screw mechanism can be used for attaching the tube section to the pinch valve, in particular to the pinch valve having the actuating mechanism. Preferably, it is provided that the pinch valve is configured such that a part of the pinch valve includes a receiving area for receiving the tube section, wherein preferably the receiving area is arranged such that a free access is available for inserting the tube section from an outside. Therefore, it is not necessary to deconstruct the part of the pinch valve for including the tube section.

Furthermore, it is provided that the tube section comprises a second interface section for attaching a handpiece to the tube section, wherein the second interface section preferably includes a second adapter element for creating a connecting to the handpiece. Especially, the second interface section can establish a connection to a hose like system including the handpiece. As a result, it is possible to provide an output for the medium at the output side of the tube section, installed, in turn, at the pinch valve. This also simplifies the access to the tube section in the mounted state and therefore eases the exchange of the tube section.

**In** particular, the first interface section and/or the second interface section includes sealing means for avoiding an exiting of the powder at an inlet side or outlet side of the tube section, preferably in the interface between the pinch valve and the tube section and/or between the hose like system and the tube section.

According to the present invention, it is provided that the inner tube element is spaced from the outer tube element. As a result, there is a sufficient space available for collecting powder in the collecting region. As a result, it is possible to collect a sufficient amount of powder between the inner tube element and the outer tube element. It is also possible that the outer tube element is formed by an expandable material such that the collecting region can be increased, if the collected powder completely fills the collecting region.

In particular, it is provided that the inner tube element has an inner channel for transporting the medium under pressure in an operation mode along a transport direction, the inner tube element having an inner curvature delineating the circumference of the inner channel in a cross section of the inner tube element along a plane perpendicular to the inner channel, a shape of the inner tube element being configured such that the inner curvature presents at least a contraction section, which, in the operation mode, undergoes deformation forces that tend to contract the contraction section of the inner curvature. It is of advantage to include a contraction section, in which a contraction along an inner curvature of the inner side of the inner tube element is established. It turned out that it is possible that the shape of the inner tube element establishes the contraction section, which counteracts tensile stresses along the inner curvature, which should be avoided as they would enhance crack growth propagation after the medium, in particular particles of the powder/gas mixture, has generated small cracks or cuts in the material of the tube, which is, for example, made of rubber. As a result, the inner tube element can reduce a risk for continuation of a crack or cut being, for example, caused by the medium being transported. Consequently, a life time of the inner tube element, being used in a pinch valve, increases. In particular, it is avoided that cuts being caused by a powder/gas mixture or more precisely being created by particles of the powder/gas mixture, when the inner tube element is squeezed, are elongated during operation, i. e. during passing the inner channel of the inner tube element, since the contraction section, being located preferably in regions being prone for cuts caused by the powder/gas mixture, counteracts the forces, which otherwise elongates the inner side of the inner channel. The inner side forms an area of the inner channel, whereas the inner curvature defines a line.

Preferably, it is provided that the inner tube element and the outer tube element distinguish from each other with respect to theirs shapes, in particular their cross section, extending perpendicular to the transport direction of the medium, when passing through the inner tube element.

In particular, the shape of the inner tube element exists also in a non-squeezed state, in which for example a medium is transported through the inner channel and, for example, an actuating mechanism acting on the inner tube element for closing the inner channel, does not act on the inner tube element such that the inner tube element is not squeezed. In other words: the shape of the inner tube element causing the contraction section is not a result of a current deformation of the inner tube element, being applied.

Preferably, the "contraction" establishes a force, being directed along the circumferential direction and along the inner curvature, in particular such that at least two sections of the contraction section have a tendency to move towards to each other, when a rip or cut is formed between these two sections. Thus, a continuation and an enlargement of the rip or crack can be avoided in an advantageous manner. In particular, the contraction sections are established in two parts of the inner curvature of the tube being opposite to each other.

Furthermore, it is preferably provided that the inner curvature comprises two contraction sections, such as a first contraction section and a second contraction section, diametrally opposed to each other. In particular, the two contraction sections are located at the inner curvature of the inner channel at opposite sides. In particular, the inner tube element has an elasticity for supporting the formation of the contraction section.

According to a preferred embodiment, it is provided that for forming the contraction section the inner tube element varies its thickness and/or a radius of curvature, being assigned to the inner curvature along the circumferential direction. It turned out that these modifications of the shape of the inner tube element, in particular concerning the cross section of the tube and/or the inner channel in a plane perpendicular to the transport direction, can establish a contraction section, giving the inner tube element the tendency to contract the inner curvature of the inner tube element along the circumferential direction.

Preferably, the cross section of the inner channel has a non-circular cross section, in particular an elliptical cross section, in a non-squeezed state. It turned out that using an elliptical cross section is an easy way to realize a contraction section, in particular by realizing a pre-shaped tube that includes the contraction section.

According to a preferred embodiment of the present invention, the cross section of the inner channel has a first axis and a second axis, which is not parallel to the first axis, preferably perpendicular to the first axis, wherein a ratio of the first axis to the second axis has a value between 0.1 and 0.95, preferably between 0.2 and 0.8 and more preferably between 0.4 and 0.8, even more preferably between 0.55 and 0.8, in a non-squeezed state. It turned out that establishing such a geometry in particular, for such ratios between 0.55 and 0.8, the lifetime of the tube can increase dramatically, in particular, compared to those inner tube elements having a cross section being circular.

Preferably, the cross section of the inner channel in a plane perpendicular to the transport direction substantially corresponds to a Cassini oval. Such a shape turned out being suitable for establishing the advantageous for forming the contraction sections.

The inner tube element is preferably pre-shaped for providing the contraction section. Such an inner tube element might be obtained from a tube having a pure circular cross section of the inner channel in an original state. By a specific treatment, such as a heat treatment, during a deformation of the inner tube element, the inner tube element stays in the pre-shaped state, even in a non-squeezed state, which acts on the inner tube element. The heating treatment might include: - heating the tube to a temperature between 40 °C and 500 °C, preferably between 60 °C and 200 °C and most preferably 80 °C and 100°C, the heating in particular taking 0 to 30 minutes, preferably 1 to 20 minutes and most preferably 1 to 10 minutes
- cooling the tube to a temperature between 1 °C and 50°C, preferably between 5°C and 50°C and most preferably between 15 °C and 25 °C. Immediately after heating, the pre-deformed tube is placed in a cold water bath having a temperature between 10 °C and 25 °C to fix the shape. In particular, a deformation tool is used to introduce the deformation with respect to the original circular shape of the cross section of the tube. The deformation of the inner tube element is established before or during heating and maintains during cooling at least temporary. In particular, after cooling deformation tool is removed and the tube keeps the desired shape, i. e. the pre-shaped form. It turned out that by a heat treatment, the internal stress inside the inner tube element can be reduced, such that the effect of the compression stress established by the shape of the inner tube element becomes more intense.

In particular, a test has been performed, wherein inner tube elements were inserted into a standard air polishing device such as an AIRFLOW^{®} device of the applicant in order to let powder under pressure pass through the inner tube element. A PERIO^{®} powder has been used in this device, such PERIO^{®} powder including glycine in the form of a small sized powder, which means a powder with grains or granules having a mean size of about 10 - 100 µm. A cycle includes three seconds in the closed state and three seconds in the opened state of the pinch valve and has been used for stressing the inner tube element of the pinch valve. It turned out that the lifetime of an inner tube element having no contract section is about 38.000 pinching cycles, whereas the lifetime of a pinch valve having a contract section is about 135.000 pinching cycles.

In particular, it is provided that a radius of curvature of the inner curvature changes along the circumferential direction, wherein a curvature of the inner curvature, being defined as reciprocal value of the radius of curvature, is smaller than 1 1/mm, more preferably smaller than 0.5 1/mm or most preferably smaller than 0.1 1/mm or even has a negative value. Preferably, the radius of curvature has its maximum in the regions of the tube section being located next or close to the parts of an actuating mechanism that acts on the tube section during operation in an actuated or squeezing state. For example, the curvature has a value of 0 to 1/mm, i. e. the inner curvature is at least partially flat. It is even considerable that the curvature has a negative value, being assigned to protrusions at the inner sider of the inner channel.

It is also conceivable that the curvature of the inside includes a protrusion facing towards the centre of the inner channel of the inner tube element. In such a case, the inside forms a "boss" or dent that supports the formation of the contraction section. Furthermore, according to another aspect of the invention, the material in the relevant regions, namely in the regions close to the parts of the actuating mechanism interacting with the tube section, is increased such that the thickness of the inner tube element increases, i. e. the wall of the inner tube element, which increases the lifetime of the tube section and consequently the durability of the pinch valve.

Furthermore, it is provided that the outer tube element has a constant thickness or a modulated thickness. Thus, it is possible to adapt the deformability of the outer tube element to the desired requirements of the outer tube element for transferring the forces during the actuating mechanism, which transfers the inner tube element into the closed state.

Preferably, it is provided that the tube section comprises a housing, in particular a rigid housing. Especially, the tube section is formed as a cartridge-like element having a housing. Furthermore, the cartridge-like tube section preferably comprises a first interface section and a second interface section, formed for example by a first and second adapter element, which are arranged at the inlet side and the outlet side of the tube section for connecting the tube section to a transport path of the pinch valve, along the medium is transporter, or the rest of the pinch valve. Thus, it is possible to simplify the exchange of the tube section, since exchanging a cartridge like element, being not deformable, can be just inserted into the pinch valve, for example by a simple exchange movement of the operator of the powder gas jet device, for example by using only one hand.

In particular, it is provided that in the mounted state the tube section interacts with an actuating mechanism, the actuating mechanism being configured to transfer the inner tube element between the closed and the open state in the mounted state of the tube section. Preferably, the actuating mechanism includes a first part and a second part, wherein a distance between the first part and the second part can be modified, in particular reduced. In the mounted state the inner tube element and/or outer tube element is arranged between the first part and the second part.

Especially, the housing of the tube section includes an opening facing to a first part and/or second part of the actuating mechanism, wherein the tube section is preferably configured such that first part and/or second part is arranged inside the housing for transferring the inner tube element from the open state to the closed state. For example, the opening is included in a sidewall surrounding the inner tube element and/or the outer tube element. Thus, it is possible that for acting on the inner tube element and/or outer tube element the first part and/or the second part enters the inside of the tube section. Preferably, it is provided that the tube section and/or the pinch valve includes means for orientating the tube section properly. For example, mounting the tube section in the pinch valve makes use of a bayonet mechanism, which guarantees the desired orientation of the opening. Alternatively, a specific key-lock mechanism guarantees the desired orientation.

Preferably, the tube section, in particular, the housing, includes a part of the actuating mechanism. For example, the first and/or second part is integral part of the tube section. Especially, the first part, representing a fixed abutment, is integral part of the tube section, while the second part is movable for transferring the tube section between the closed state and the open state. For example, the first part is a protrusion at the inner side of the outer tube element, the protrusion being for example a bulge or boss.

Preferably, the outer tube element is at least partially transparent and/or the tube section includes means for identifying the medium between the inner tube element and the outer tube element. For example, the rigid housing has a window section for allowing to look inside the tube section. Thus, it is possible to see or identify a situation, in which powder is accumulated or collected in the collecting region between the inner tube element and the outer tube element.

Thus, it is possible to realize as soon as possible that there is a defect in the inner tube element and an exchange of the tube section is necessary. For example, it is possible that the outer tube element changes its color or its electric conductivity if it contacts the powder. As a result, it is possible to install an analysis mechanism, which informs the operator as soon as possible that powder exits the inner tube element. Thus, a fast reaction can avoid further damages in the pinch valve.

Another aspect of the present invention is a pinch valve having a tube section according to the present invention. All features and benefits being discussed for the tube section apply analogously for the pinch valve and vice versa.

Another aspect of the present invention is the powder gas jet device having a pinch valve according to the present invention. All advantages and specifications being discussed in context of the pinch valve apply analogously for the powder gas jet device and vice versa.

Preferably, it is provided that the pinch valve is arranged inside the powder gas jet device. In this case, the benefit of avoiding the exit of the powder is significant. Otherwise the powder exiting the tube of the pinch valve would interact with other components, especially electrical components of the inside of the powder gas jet device, which could be even damaged by the powder.

Preferably, it is provided that the pinch valve is arranged at the outside of the powder gas jet device, preferably in a connection region between a stationary unit and a hose-like system being connected to a handpiece of the powder gas jet device. Such an arrangement is of advantage, since it allows an operator to have direct access to the pinch valve and especially to the receiving area of the pinch valve for exchanging the tube section. Thus, it is even not necessary in case of a defect of the inner tube element to open the stationary unit. Instead, the operator itself can exchange the tube section by himself without contacting an expert for pinch valves to exchange it.

Wherever not already described explicitly, individual embodiments or their individual aspects and features can be combined or exchanged with one another, whenever such a combination or exchange is meaningful.

In the drawings:
- **Fig. 1**: shows schematically a powder gas jet device according to a first exemplary embodiment of the present invention,
- **Fig. 2**: shows schematically a part of the powder gas jet device including a pinch valve according to a first exemplary embodiment of the present invention,
- **Fig. 3**: shows schematically a pinch valve (top) and an inner tube (bottom) according to a first exemplary embodiment of the present invention and
- **Fig. 4**: shows schematically an inner tube according to a second exemplary embodiment of the present invention.

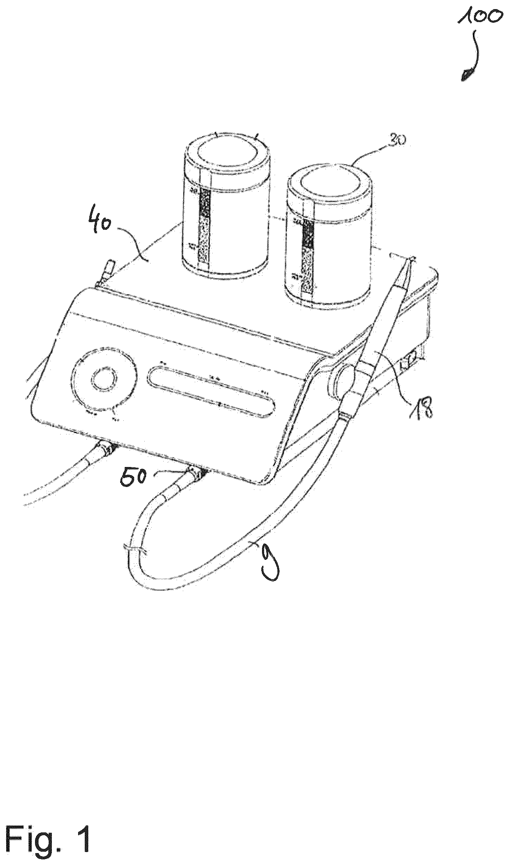

**Figure 1** schematically shows a powder gas jet device 100 according to a first exemplary embodiment of the present invention. Such a powder gas jet device 100 is used for dental prophylaxis by air polishing. Thereby, the powder gas jet device 100 provides a powder gas mixture and ejects the powder gas mixture via a handpiece 18 to a surface of the tooth for removing a biofilm and/or calculus. Besides a handpiece 18 including a nozzle, the powder gas jet device 100 preferably has a stationary unit 40, which can, for example, be placed on a table and is intended for producing and providing the powder gas mixture being used for air polishing. Furthermore, the powder gas jet device 100 comprises at least one removable and, in particular exchangeable, powder-gas-chamber 30, which can be connected to the stationary unit 40 for providing a specific powder being used during the dental treatment.

In particular, it is provided that the powder gas mixture being used during air polishing is formed inside the powder chamber 30 by introducing gas, in particular air, into the powder chamber 30, by mixing the gas and the powder inside the powder chamber 30, for example by using a venturi effect, and by finally exiting the powder chamber 30 as powder gas mixture. For transporting the powder gas mixture to the handpiece 18 a hose-like system 9 is particularly used. For example, the hose-like system 9 includes an inner hose for transporting the medium, i. e. the powder-gas-mixture, and a sleeve hose surrounding the inner hose for transporting the powder-gas-mixture. Preferably, the hose-like system 9 is flexible such that an operator can easily orientate the handpiece 18 in a desired position or orientation. Preferably, the hose-like system 9 is connected to the stationary unit 40 via a connection region 50. For example, such a connection region 50 is located at a front panel of the stationary unit 40. For controlling an application of a powder gas mixture by the handpiece 18, a valve system is needed, which controls, whether the powder gas mixture is emitted via the hose like system 9 by the handpiece 18 or not. Such a valve system might be controlled by a foot pedal (not shown), which can be actuated by an operator.

Such a valve is preferably located downstream to the powder chamber 30, since otherwise a delay between acting on the foot pedal and ejecting the powder gas mixture from the handpiece 18 occurs, since the powder chamber 30 needs to be filled with gas in the beginning otherwise. However, locating the valve system downstream to the powder chamber 30 results in specific challenges regarding the choice of the proper valve system. Valve systems having a specific mechanism and including several mechanical components can interact with powder of the powder gas mixture such that those valve systems are typically damaged by the powder being accumulated in the valve system. Therefore, it turned out that placing a pinch valve 1 downstream to the powder chamber 30 is a good choice for a proper valve system in a powder gas jet device 100. As a consequence, the powder gas mixture only interacts with an inner side 12 of an inner tube 10. The inner tube being arranged in the pinch valve can be transferred between an open position and a closed position. In the open position a medium, in particular the powder gas mixture, is transported through the inner tube, while the transport of the medium is stopped or blocked, when the inner tube is in the closed state. For example, the inner tube is squeezed for transferring the inner tube from an open state to a closed state.

However, after each number of squeezing action, there is a risk of crack formation in the inner tube. Such a crack can allow the powder-gas-mixture to exit the inner tube, especially in the region of the actuating mechanism, which causes the squeezing process for transferring the inner tube from an open state to a closed state. As a result, powder exits the pinch valve region in an uncontrolled and disadvantaged way. This makes a complicated and laborious cleaning process necessary before the pinch valve can be repaired, especially, when the pinch valve is located inside the stationary unit 40 of the powder gas jet device 100.

For avoiding such a laborious and complicated cleaning process, the present invention suggests a specific tube section 1 being part of the pinch valve 50 in a mounted state of this tube section 1.

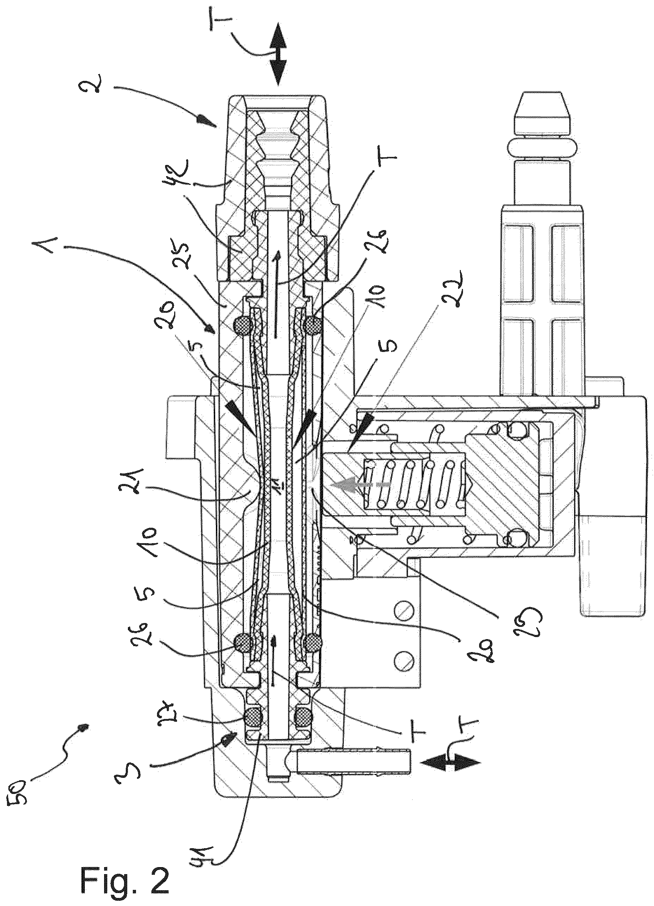

In **figure 2****,** a pinch valve 50 including a tube section 1 according to a first exemplary embodiment of the present invention is illustrated. The pinch valve 50 includes an actuating mechanism having a first part 21 and/or a second part 22. In the illustrated embodiment, the actuating mechanism is configured such that for squeezing the inner tube element 10, the distance between the first part 21 and the second part 22 is reduced. This is done for example by using a pneumatic mechanism, an electric drive mechanism and/or a mechanic mechanism, including for example several spring elements, in particular for automatically increasing the distance between the part 21 and the second part 22.

The inner tube element 10 is located between the first part 21 and the second part 21 of the actuating mechanism, in particular along a direction being perpendicular to the transport direction T. As a result, it is possible to use the actuating mechanism for transferring the inner tube element 10 from an open state to a closed state by reducing the distance between the first part 21 and the second part 22 until the inner channel 11 of the inner tube element 10 is closed. In this case, the inner tube element 10 is in the closed state.

For avoiding a complicated and laborious cleaning process, an outer tube element 20 is provided, the outer tube element 20 surrounding the inner tube element 10, in particular in a sleeve-like manner. Thus, it is possible to collect powder, which exits the inner tube element 10 inside a collecting region 5 being arranged between the inner tube element 10 and the outer tube element 20. Especially, it is provided that the inner tube element 10 and the outer tube element 20 are located between the first part 21 and the second part 22 of the actuating mechanism. According to the invention, it is provided that the outer tube element 20 is at least as deformable as the inner tube element 10 such that the actuating mechanism can transfer the inner tube element 10 into the closed state by deforming both, the outer tube element 20 and the inner tube element 10. As a result, it is possible to act on the inner tube element 10 via the outer tube element 20 for closing the inner channel 11 and for hindering the medium to be transported through the inner tube element 10. Especially, the outer tube element 20 forms a sleeve-like outer tube element 20, surrounding and covering the inner tube element 10, preferably along its whole extension in the region of the pinch valve 50.

Furthermore, it is provided that the tube section 1, having the inner tube element 10 and the outer tube element 20 is configured for being removable from the pinch valve 50. In other words: the tube section 1 forms an exchangeable part of the pinch valve 50. Thus, an exchange of the tube section 1 is easy and uncomplicated without any cleaning process in case of a defect, especially in case of a crack inside the inner tube element 10, which causes an exit of the medium, preferably a powder gas mixture, being transported through the inner channel11 of the inner tube element 01.

Preferably, it is provided that the tube section 1 is configured as a cartridge, having for example a housing 25, into which the inner tube element 10 and the outer tube element 20 are incorporated. The housing 25 is preferably formed by a rigid material, which surrounds the inner tube element 10 and the outer tube element 20. For example, it is also provided that the first part 21 of the actuating mechanism is part of the cartridge-like element, in particular of the inner side of the housing 25 of the tube section 1.

In the embodiment of figure 2, the first part 21 is formed as a protrusion extending into the inner of the housing 25, which surrounds the inner tube element 10 and outer tube element 20, of the cartridge like tube section 1.

Furthermore, it is provided that the exchangeable tube section 1 includes a first adapter element 41 and a second adapter element 42, which are arranged on an inlet side 3 and an outlet section 2 of the tube section 1, respectively. The first adapter element 41 and the second adapter element 42 are preferably configured to create a sealed connection to the transport path of the powder-gas-mixture of the pinch valve 50, in particular to a part of the stationary unit 40, on the one hand and to the hose-like system 9 on the other side, the hose like system 9 being, in turn, connected to the handpiece 18 of the powder gas jet device 100. Thus, the tube section 1 can be inserted into the pinch valve 50 or the powder gas jet device 100 without risking powder to exit at the inlet side 3 and the outlet side 2 of the tube section 1. In particular, it is provided that the first adapter element 41 and the second adapter element 42 are connected to the housing 25 of the cartridge by extending through corresponding front side openings of the housing 25, surrounding preferably the inner tube element 10 and the outer tube element 20 in a sleeve like manner and being more preferably formed cylindrically. Especially, the powder-gas-mixture is transported through a channel being incorporated into the first adapter element 41 and the second adapter element 42 respectively. In the embodiment illustrated in figure 2, the inner tube element 10 is connected to the first adapter element 41 and the second adapter element 42. Especially, it is provided that the inner tube element 10 and the outer tube element 20 are fixed by a clamping mechanism. Especially, the clamping mechanism is established via a sealing element 26, such as a o-ring or sealing ring, being arranged on the one hand at an inner side from the housing 25 and on the other hand at the first adapter element 41 or second adapter element 42 respectively. In other words, for realizing the clamping mechanism, the inner tube element 10 and the outer tube element 20, preferably their end sections, are located between the sealing element 26 and the first adapter element 41 and/or second adapter element 42 and are clamped for fixing. **It** is also thinkable that the clamping mechanism is supported by a form-fitting mechanism being established by a corresponding outer curvature of the first adapter element 41 and the second adapter element 42 such as a recess, being located at the same position as the sealing element 26 at the inner side of the housing 25.

Alternatively, it is also thinkable that the inner tube element 10 and the outer tube element 20 are connected to the housing 25 and/or the first adapter element 41 and/or second adapter element 42 by a frictional force, a material connection and/or a form-fitting mechanism. Preferably, it is provided that it is possible to insert the cartridge-like tube section 1 via a translational movement into a corresponding recess or receiving area of the pinch valve 50, preferably without any rotational movement. Thus, it is possible to easily exchange the cartridge-like element. Alternatively, it is also thinkable that the installation movement of the cartridge comprises a rotational movement, such as a bayonet mechanism.

Furthermore, it is provided that the cartridge-like tube section 1, especially its housing 25 has an opening 29 in a sidewall, otherwise surrounding the inner tube element 10 and the outer tube element 20. This opening 29 is provided for the second part 42 of the actuating mechanism, which passes through the opening 29 for acting on the inner tube element 10 and the outer tube element 20, being located inside the housing 25. Thus, it is necessary that the cartridge-like tube section 1 is orientated properly for allowing the second part 42 of the actuating mechanism to enter the inner side of the housing 25 for acting or squeezing the inner tube element 10 and outer tube element 20 of the tube section 1.

Preferably, the tube section 1 is exchangeable and the tube section 1 includes the parts having the same hatching in figure 2. All parts having a different hatching concern parts of the pinch valve 20 being permanently installed, in particular, in the powder gas jet device 100.

Furthermore, it is provided that the tube section 1 comprises a further sealing element 27, for example incorporated in the first adapter element 41. In particular, the part of the first adapter element 41 being outside of the housing 25, includes the further sealing element 27 for a seal-tight connection between the pinch valve 50 on the one hand and the tube section 1 on the other hand.

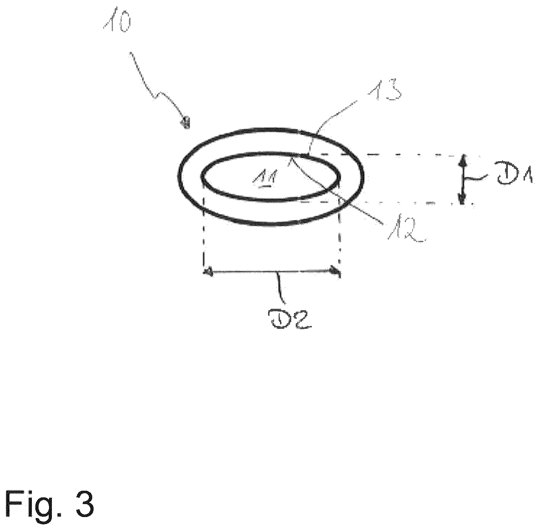

In **figure 3****,** schematically an inner tube element 10 for a pinch valve 1 according to an exemplary embodiment of the present invention is illustrated. The inner tube element 10 is configured such that the inner tube element 10 has a contraction section, acting on an inner side 12 of the inner tube element 10 such that a contraction along at least a part of an inner curvature 13 of the inner tube element 10 is established, the inner curvature 13 bordering a cross section of the inner channel 11 in a plane perpendicular to the transport direction T. The compression stress defines a contraction section giving the inner tube the tendency to contract along the inner curvature 13. As a consequence, the inner tube element 10 itself counteracts a crack or a cut formation, in particular counteracts against a continuation of a realized or established crack or cut in the inner side 12 of the inner tube element 10. In particular, it is provided that the compression stress, establishing the desired compression stress, is located in regions of the inner tube element 10, being located next or adjacent to the first part 21 and the second part 22 of the actuating mechanism, respectively. In other words a first contraction section faces a first part 21 and a second contraction section faces a second part 22 in an assembled state of the pinch valve 1. In particular, the contract sections are established in such sections of the inner tube element 10 contacting the first part 21 and/or second part 22 of the actuating mechanism of the pinch valve 1.

In particular, the shape of the inner tube element 10 is at least established in a non-squeezed state of the pinch valve 1. Such a contraction is, for example, realized by a pre-shaping of the inner tube element 10. As a consequence, a cross section of the inner channel 11 measured in a plane perpendicular to the transport direction T, differs from a circular or pure circular cross section, in particular in a non-squeezed state. In the embodiment of figure 3, the cross section of the inner channel 11 is elliptical. Preferably, the inner tube element 10 is at least partially pre-shaped, namely in the part being connected or being located inside the actuating mechanism. The inner tube element 10 outside the actuating mechanism or the joining unit 32 might be not pre-shaped. Furthermore, it is provided that a radius of curvature changes along the inner side 12 of the inner tube element 10 in a non-squeezed state. In particular, the radius of an inner curvature 13 has, for example, its maximum in a tube section or region of the inner tube element 10 being located in the non-squeezed state directly next to the first part 21 or the second part 22 respectively of the pinch valve 1. Preferably, the inner curvature 13 has a curvature being defined as reciprocal value (1/r) of the radius of curvature (r). The curvature might smaller than 1 1/mm, more preferably smaller than 0.5 1/mm or most preferably smaller than 0.1 1/mm or even negative. Especially, the curvature is 0 to 1/mm. The inner curvature 13 is assigned to the inner side 12 of the inner tube element 10 in a cross section perpendicular to the transport direction T. Since these regions are the most stressed ones during the operation, in particular regarding a tensile stress, the contraction avoids the tensile stress that would otherwise support an increase or a continuation of a rupture or crack being formed at the inner side 12 of the inner tube element 10.

Preferably, the cross section of the inner channel 11 has a geometry in a non-actuated state, having a first axis D1 and a second axis D2. Thereby, the first axis D1 extends into a direction, along which the distance between the first part 21 and the second part 22 of the actuating mechanism is changed for transforming the pinch valve 1 between the closed state and the opened state. The second axis D2 is measured in a direction being perpendicular to the first axis D1 as well as being perpendicular to the transport direction T. Furthermore, it is preferably provided that the cross section of the inner channel 11 has a geometry, the ratio of the first axis D1 to the second axis D2 having a value between 0.4 and 0.95, preferably between 0.5 and 0.8 and most preferably between 0.5 and 0.8, in a non-squeezed state.

For example, such a pre-shaped form having a contraction section is realized by performing a heat treatment during a deformation of the inner tube element 10 having a circular cross section in an original state, i. e. before the heat treatment.

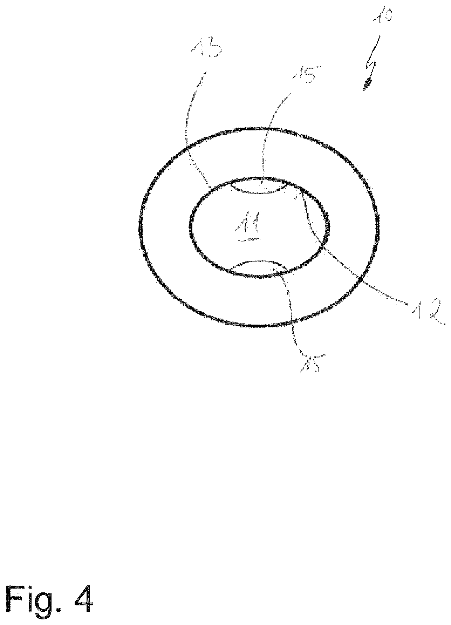

In **figure 4****,** the inner tube element 10 according to a second exemplary embodiment of the present invention is schematically shown. In particular, it is provided that the inner side 12 of the inner tube element 10 has at least one protrusion 15 that protrudes from the inner tube element 10 inside the inner channel 11 in a direction towards the centre of the inner channel 11. Preferably, the inner tube element 10 includes two protrusions 15 being arranged opposite to each other in a direction perpendicular to the transport direction T. In particular, the at least one protrusion 15 is located in a tube section 1 being adjacent to the first part 21 and second part 22 of the actuating mechanism.

### Reference numbers:

- 1: tube section
- 2: outlet side
- 3: inlet side
- 5: collecting region
- 9: hose like system
- 10: inner tube element
- 11: inner channel
- 12: inner side
- 13: inner curvature
- 15: protrusion
- 20: outer tube element
- 21: first part
- 22: second part
- 25: housing
- 26: sealing element
- 27: further sealing element
- 29: opening
- 30: powder chamber
- 40: stationary unit
- 41: adapter element
- 42: adapter element
- 50: connection region
- 100: powder gas jet device
- T: transport direction
- D1: first axis
- D2: second axis

## Claims

1. A tube section (1) for a pinch valve (50), comprising
- an inner tube element (10) for transporting a medium, the inner tube (10) being transferrable between an open state, in which the medium can flow through the inner tube element (10), and a closed state, in which the medium is hindered to flow through the inner tube element (10), and
- an outer tube element (20), surrounding the inner tube element (10), for creating a collecting region (5) between the inner tube element (10) and the outer tube element (20) to collect the medium in case of a leakage of the inner tube element (10),
wherein the inner tube element (10) and the outer tube element (20) are configured for transferring the inner tube element (10) between an open state and a closed state in dependency of a force acting on the outer tube element (20), wherein the inner tube element (10) is at least partially spaced from the outer tube element (20), **characterized in that** the outer tube element (20) is at least as deformable as the inner tube element (10) such that an actuating mechanism can transfer the inner tube element (10) into the closed state by deforming both, the outer tube element (20) and the inner tube element (10) and such that the outer tube element (20) defines a hermetic barrier to powder in case of a leakage of the inner tube element (10).

2. The tube section (1) of claim 1, wherein the tube section (1) comprises a first interface section for inserting the tube section (1) into a pinch valve (50) in an exchangeable manner, wherein preferably the first interface section is formed by a first adapter element (41).

3. The tube section (1) according to one of the preceding claims, wherein the inner tube element (10) having an inner channel (11) for transporting the medium under pressure in an operation mode along a transport direction (T), the inner tube element (10) having an inner curvature delineating the circumference of the inner channel (11) in a cross section of the inner tube element (10) along a plane perpendicular to the inner channel (T), a shape of the inner tube element (10) being configured such that the inner curvature (13) presents at least a contraction section, which, in the operation mode, undergoes deformation forces that tend to contract the contraction section of the inner curvature (13).

4. The tube section (1) according to claim 4, wherein for forming the contraction section the inner tube element (10) varies its thickness and/or a radius of the curvature, being assigned to the inner curvature (13), along the circumferential direction.

5. The tube section (1) according to claim 4 or 5, wherein a cross section of the inner channel (11) has a non-circular cross section, in particular an elliptical cross section, in a non-squeezed state.

6. The tube section (1) of one of the preceding claims, wherein the outer tube element (20) is made from a deformable material, wherein a deformability of the outer tube element (20) is larger than a deformability of the inner tube element (10).

7. The tube section (1) according to one of the preceding claims, wherein the tube section (10) comprises a housing (25), in particular a rigid housing (25).

8. A pinch valve (50) having a tube section (1) according to one of the previous claims.

9. The pinch valve (50) according to claim 8, wherein the tube section (1) is configured to interact with an actuating mechanism in the mounted state, the actuating mechanism being configured to transfer the inner tube element (10) between the closed and the open state in the mounted state of the tube section (1).

10. The pinch valve (50) according to claim 9, wherein the housing (25) of the tube section (10) includes an opening (29) facing to a first part (21) and/or second part (22) of the actuating mechanism in the mounted state, wherein the tube section (1) is preferably configured such that the first part (21) and/or the second part (22) can be arranged inside the housing (25) for transferring the inner tube element (10) from the open state to the closed state.

11. The pinch valve (50) according to one of the claims 9 to 10, wherein the tube section (1) includes a part of the actuating mechanism.

12. A powder gas jet device (100) having a pinch valve (50) according to claims 8-11.

13. The powder gas jet device (100) according to claim 12, wherein the pinch valve (50) is arranged inside the powder gas jet device (100).

14. The powder gas jet device (100) according to claim 12, wherein the pinch valve (50) is arranged at an outside of the powder gas jet device (100), preferably in a connection section (50) between a stationary unit (40) and hose like system (9), being connected to a handpiece (18) of the powder gas jet device (100).

## Patentansprüche

1. Rohrabschnitt (1) zur Durchführung eines Quetschventils (50), umfassend
- ein inneres Rohrelement (10) zum Transportieren eines Mediums, wobei das innere Rohr (10) zwischen einem offenen Zustand, in dem das Medium durch das innere Rohrelement (10) fließen kann, und einem geschlossenen Zustand, in dem das Medium daran gehindert wird, durch das innere Rohrelement (10) zu fließen, überführbar ist, und
- ein das innere Rohrelement (10) umschließendes äußeres Rohrelement (20) zur Durchführung eines Sammelbereichs (5) zwischen dem inneren Rohrelement (10) und dem äußeren Rohrelement (20) zum Sammeln des Mediums im Falle einer Undichtheit des inneren Rohrelements (10), wobei das innere Rohrelement (10) und das äußere Rohrelement (20) so konfiguriert sind, dass sie das innere Rohrelement (10) in Abhängigkeit von einer auf das äußere Rohrelement (20) wirkenden Kraft zwischen einem offenen Zustand und einem geschlossenen Zustand zu versetzen, wobei das innere Rohrelement (10) zumindest teilweise vom äußeren Rohrelement (20) beanstandet ist, **dadurch gekennzeichnet, dass** das äußere Rohrelement (20) zumindest ebenso verformbar ist wie das innere Rohrelement (10), so dass ein Betätigungsmechanismus in der Lage ist, das innere Rohrelement (10) in den geschlossenen Zustand zu versetzen, indem sowohl das äußere Rohrelement (20) als auch das innere Rohrelement (10) verformt werden und dass das äußere Rohrelement (20) im Falle einer Undichtheit des inneren Rohrelements (10) eine hermetische Barriere gegen Pulver festlegt.

2. Rohrabschnitt (1) nach Anspruch 1, wobei der Rohrabschnitt (1) einen ersten Schnittstellenbereich zur Durchführung des wiederholbaren Einsetzens des Rohrabschnitts (1) in ein Quetschventil (50) umfasst, wobei vorzugsweise der erste Schnittstellenbereich durch ein erstes Adapterelement (41) gebildet ist.

3. Rohrabschnitt (1) gemäß einem der vorangehenden Ansprüche, wobei das innere Rohrelement (10) einen inneren Kanal (11) zum Transportieren des Mediums unter Druck in einem Betriebsmodus entlang einer Transportrichtung (T) aufweist, wobei das innere Rohrelement (10) eine innere Krümmung aufweist, die den Umfang des inneren Kanals (11) in einem Querschnitt des inneren Rohrelements (10) entlang einer Ebene senkrecht zum inneren Kanal (T) begrenzt, wobei die Form des inneren Rohrelements (10) so ausgebildet ist, dass die innere Krümmung (13) zumindest einen Verengungsabschnitt aufweist, der im Betriebsmodus unter Verformungskräften steht, die dazu neigen, den Verengungsabschnitt der inneren Krümmung (13) zu verengen .

4. Rohrabschnitt (1) gemäß Anspruch 3, wobei zur Ausgestaltung des Verengungsabschnitts das innere Rohrelement (10) seine Dicke und/oder einen Krümmungsradius entlang der Umlaufrichtung, die der inneren Krümmung (13) zugeordnet wird, variiert.

5. Rohrabschnitt (1) gemäß Anspruch 3 oder 4, wobei ein Querschnitt des inneren Kanals (11) in einem nicht gepressten Zustand einen nicht kreisförmigen Querschnitt, insbesondere einen elliptischen Querschnitt, aufweist.

6. Rohrabschnitt (1) aus einem der vorhergehenden Ansprüche, wobei das äußerer Rohrelement (20) aus einem verformbaren Material hergestellt ist, wobei die Verformbarkeit des äußeren Rohrelements (20) größer ist als die Verformbarkeit des inneren Rohrelements (10).

7. Rohrabschnitt (1) gemäß einem der vorhergehenden Ansprüche, wobei der Rohrabschnitt (10) ein Gehäuse (25), insbesondere ein starres Gehäuse (25), umfasst.

8. Quetschventil (50) mit einem Rohrabschnitt (1) gemäß einem der vorhergehenden Ansprüche.

9. Quetschventil (50) gemäß Anspruch 8, wobei der Rohrabschnitt (1) so ausgebildet ist, dass er im montierten Zustand mit einem Betätigungsmechanismus in Wechselwirkung steht, wobei der Betätigungsmechanismus so ausgebildet ist, dass er das innere Rohrelement (10) im montierten Zustand des Rohrabschnitts (1) zwischen dem geschlossenen und dem offenen Zustand überführt.

10. Quetschventil (50) gemäß Anspruch 9, wobei das Gehäuse (25) des Rohrabschnitts (10) eine Öffnung (29) einschließt, die im montierten Zustand zu einem ersten Teil (21) und/oder einem zweiten Teil (22) des Betätigungsmechanismus hin ausgerichtet ist, wobei der Rohrabschnitt (1) vorzugsweise so ausgebildet ist, dass das erste Teil (21) und/oder das zweite Teil (22) zur Überführung des inneren Rohrelements (10) vom offenen Zustand in den geschlossenen Zustand innerhalb des Gehäuses (25) angeordnet werden können .

11. Quetschventil (50) gemäß einem der Ansprüche 9 bis 10, wobei der Rohrabschnitt (1) einen Teil des Betätigungsmechanismus einschließt.

12. Pulverstrahlgerät (100) aufweisend ein Quetschventil (50) gemäß den Ansprüchen 8 bis 11.

13. Pulverstrahlgerät (100) gemäß Anspruch 12, wobei das Quetschventil (50) innerhalb des Pulverstrahlgeräts (100) angeordnet ist.

14. Pulvergasstrahlgerät (100) gemäß Anspruch 12, wobei das Quetschventil (50) an einer Außenseite des Pulvergasstrahlgeräts (100) angeordnet ist, vorzugsweise in einem Verbindungsabschnitt (50) zwischen einer stationären Einheit (40) und einem schlauchähnlichen System (9), das mit einem Handstück (18) des Pulvergasstrahlgeräts (100) verbunden ist.

## Revendications

1. Tronçon de tube (1) pour une vanne à pincement (50), comprenant
- un élément de tube intérieur (10) pour transporter un fluide, le tube intérieur (10) pouvant être transféré entre un état ouvert, dans lequel le fluide peut s'écouler à travers l'élément de tube intérieur (10), et un état fermé, dans lequel le fluide est empêché de s'écouler à travers l'élément de tube intérieur (10), et
- un élément de tube extérieur (20), entourant l'élément de tube intérieur (10), pour créer une zone de collecte (5) entre l'élément de tube intérieur (10) et l'élément de tube extérieur (20) afin de collecter le fluide en cas de fuite de l'élément de tube intérieur (10),
dans lequel
l'élément de tube intérieur (10) et l'élément de tube extérieur (20) sont conçus pour transférer l'élément de tube intérieur (10) entre un état ouvert et un état fermé en fonction d'une force agissant sur l'élément de tube extérieur (20),
l'élément de tube intérieur (10) est au moins partiellement espacé de l'élément de tube extérieur (20),
**caractérisé en ce que** l'élément de tube extérieur (20) est au moins aussi déformable que l'élément de tube intérieur (10) de telle sorte qu'un mécanisme d'actionnement peut transférer l'élément de tube intérieur (10) dans l'état fermé en déformant à la fois l'élément de tube extérieur (20) et l'élément de tube intérieur (10) et de telle sorte que l'élément de tube extérieur (20) définit une barrière hermétique à la poudre en cas de fuite de l'élément de tube intérieur (10).

2. Tronçon de tube (1) selon la revendication 1,
dans lequel le tronçon de tube (1) comprend une première portion d'interface pour insérer le tronçon de tube (1) dans une vanne à pincement (50) de manière interchangeable, de préférence, la première portion d'interface étant formée par un premier élément adaptateur (41).

3. Tronçon de tube (1) selon l'une des revendications précédentes,
dans lequel l'élément de tube intérieur (10) comporte un canal intérieur (11) pour transporter le fluide sous pression dans un mode de fonctionnement le long d'une direction de transport (T), l'élément de tube intérieur (10) ayant une courbure intérieure délimitant la circonférence du canal intérieur (11) dans une section transversale de l'élément de tube intérieur (10) dans un plan perpendiculaire au canal intérieur (T), la forme de l'élément de tube intérieur (10) étant conçue de telle sorte que la courbure intérieure (13) présente au moins une portion de contraction qui, en mode de fonctionnement, subit des forces de déformation qui tendent à contracter la portion de contraction de la courbure intérieure (13).

4. Tronçon de tube (1) selon la revendication 4,
dans lequel, pour former la portion de contraction, l'élément de tube intérieur (10) varie son épaisseur et/ou un rayon de courbure, attribué à la courbure intérieure (13), le long de la direction circonférentielle.

5. Tronçon de tube (1) selon la revendication 4 ou 5,
dans lequel une section transversale du canal intérieur (11) présente une section transversale non circulaire, en particulier une section transversale elliptique, à l'état non pincé.

6. Tronçon de tube (1) selon l'une des revendications précédentes,
dans lequel l'élément de tube extérieur (20) est réalisé en un matériau déformable, la déformabilité de l'élément de tube extérieur (20) étant supérieure à la déformabilité de l'élément de tube intérieur (10).

7. Tronçon de tube (1) selon l'une des revendications précédentes,
dans lequel le tronçon de tube (1) comprend un boîtier (25), en particulier un boîtier rigide (25).

8. Vanne à pincement (50) comportant un tronçon de tube (1) selon l'une des revendications précédentes.

9. Vanne à pincement (50) selon la revendication 8,
dans laquelle le tronçon de tube (1) est conçu pour interagir avec un mécanisme d'actionnement à l'état monté, le mécanisme d'actionnement étant conçu pour transférer l'élément de tube intérieur (10) entre l'état fermé et l'état ouvert, à l'état monté du tronçon de tube (1).

10. Vanne à pincement (50) selon la revendication 9,
dans laquelle le boîtier (25) du tronçon de tube (10) présente une ouverture (29) en regard d'une première partie (21) et/ou d'une deuxième partie (22) du mécanisme d'actionnement à l'état monté, le tronçon de tube (1) étant de préférence conçu de telle sorte que la première partie (21) et/ou la deuxième partie (22) puisse(nt) être disposée(s) à l'intérieur du boîtier (25) pour transférer l'élément de tube intérieur (10) de l'état ouvert à l'état fermé.

11. Vanne à pincement (50) selon l'une des revendications 9 à 10,
dans laquelle le tronçon de tube (1) comprend une partie du mécanisme d'actionnement.

12. Dispositif à jet de gaz et de poudre (100) comportant une vanne à pincement (50) selon les revendications 8 à 11.

13. Dispositif à jet de gaz et de poudre (100) selon la revendication 12,
dans lequel la vanne à pincement (50) est disposée à l'intérieur du dispositif à jet de gaz et de poudre (100).

14. Dispositif à jet de gaz et de poudre (100) selon la revendication 12,
dans lequel la vanne à pincement (50) est disposée à l'extérieur du dispositif à jet de gaz et de poudre (100), de préférence dans une portion de liaison (50) entre une unité stationnaire (40) et un système de type tuyau flexible (9), reliée à une pièce à main (18) du dispositif à jet de gaz et de poudre (100).
